# EUROPÄISCHE PATENTSCHRIFT

(11) **EP 1 847 897 B1**
(45) Veröffentlichungstag und Bekanntmachung des Hinweises auf die Patenterteilung: **29.01.2014**
(21) Anmeldenummer: 07101372.6
(22) Anmeldetag: 30.01.2007
(51) Int. Cl.: A01B 69/04

(54) **Verfahren zur Steuerung eines landwirtschaftlichen Maschinensystems**
Method of controlling an agricultural machine
Procédé de contrôle de machines agricoles

(30) Priorität: 21.04.2006 DE 102006019216
(43) Veröffentlichungstag der Anmeldung: 24.10.2007
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Brunnert, Andreas, 33397 Rietberg (DE); Meyer zu Helligen, Lars Peter, 32139 Spenge (DE); Nienaber, Gerhard, 59320 Ennigerloh (DE)
(74) Vertreter: Ellerbrächter, Dirk

(56) Entgegenhaltungen:
- EP-A1- 1 316 868
- EP-A2- 1 602 267
- US-A- 6 128 574
- US-A1- 2004 006 957

## Beschreibung

Die Erfindung betrifft ein Verfahren zur Steuerung eines landwirtschaftlichen Maschinensystems bei der Bearbeitung eines zu bearbeitenden Territoriums, bei dem eine Route für das Maschinensystem erstellt wird, welche Nutzfahrspuren umfasst, entlang deren das Maschinensystem bei der Bearbeitung des Territoriums gefahren wird, und welche Vorgewendefahrspuren umfasst, entlang deren das Maschinensystem jeweils von einer Nutzfahrspur zu einer nachfolgend zu befahrenden Nutzfahrspur gefahren wird, wobei zum Ende einer Nutzfahrspur und/oder während des Abfahrens einer nachfolgenden Vorgewendefahrspur und/oder zu Beginn einer nachfolgenden Nutzfahrspur vom Maschinensystem jeweils automatisch eine Vorgewende-Arbeitsschrittsequenz abgearbeitet wird. Außerdem betrifft die Erfindung ein automatisches Steuersystem zur Steuerung eines landwirtschaftlichen Maschinensystems auf einem zu bearbeitenden Territorium, mit dem ein solches Verfahren durchführbar ist.

Nachdem die Leistungsfähigkeit landwirtschaftlicher Maschinensysteme, d.h. von Arbeitsfahrzeugen, z.B. Mähdreschern, Feldhäckslern oder Schleppern mit diversen Anbauten wie Düngerstreuern, Sämaschinen, Spritzeinrichtungen, Wendern, Schwadern etc. stark gesteigert wurde, gewinnt in den letzten Jahren die Planung des Arbeitsablaufs immer mehr an Bedeutung. Für die einzelnen Arbeitseinsätze steht insbesondere bei der Ernte oft wetterbedingt nur ein begrenzter Arbeitszeitraum zur Verfügung, der häufig wegen einer mangelnden Einsatzplanung nicht optimal ausgenutzt wird. Darüber hinaus ist eine präzise Einsatzplanung wichtig, um die theoretisch mögliche maximale Leistungsfähigkeit der Maschinen auch im praktischen Einsatz zu erreichen. Um dieses Ziel einer optimalen Durchführung des Arbeitseinsatzes zu erreichen, wurden sog. Routenplanungssysteme und -verfahren entwickelt, mit denen für das jeweilige Maschinensystem eine optimale Route bei der Bearbeitung des betreffenden Territoriums, d. h. eines bestimmten Schlags, ermittelt wird. Das Verfahren des betreffenden Maschinensystems entlang dieser Route kann dann je nach Ausgestaltung des Maschinensystems vollautomatisch, d. h. durch eine Lenkautomation, halbautomatisch oder einfach manuell mit Unterstützung durch eine geeignete Anzeigevorrichtung erfolgen, bei der der Benutzer versuchen muss, das Fahrzeug auf einer virtuellen Fahrlinie zu halten. Üblicherweise arbeiten solche Routenplanungssysteme bzw. Lenkautomaten mit satellitengestützten Navigationseinrichtungen, beispielsweise mit Hilfe von GPS-Empfängern (GPS = Global Positioning System). Zur Verbesserung der Genauigkeit gibt es verschiedene Korrekturverfahren, wie beispielsweise für ein GPS-Verfahren das sog. DGPS (Differentielles GPS). Ein Beispiel für ein solches Routenplanungssystem ist in der EP 0 821 296 B1 beschrieben. Wie oben erläutert, umfasst eine solche geplante Route in der Regel nicht nur die geplanten Fahrwege innerhalb des zu bearbeitenden Schlags, d. h. die einzelnen "Nutzfahrspuren" auf dem Feld, sondern auch die Fahrwegverläufe für Wendemanöver in den Vorgewendebereichen, um von einer Nutzfahrspur in eine meist unmittelbar daneben liegende oder mit Abstand parallel versetzte Nutzfahrspur zu gelangen.

Aus der EP 1 602 267 A2 ist ein Routenplanungssystem für landwirtschaftliche Arbeitsmaschinen bekannt, welches auf der Basis von maschinenspezifischen Parametern wie der Vorsatzgerätebreite oder der Ausrichtung und Position der Arbeitsmaschine in Bezug auf eine erwartete Sollposition und Sollausrichtung eine geplante Fahrtroute dynamisch anpasst. Die Ermittlung der Fahrtroute erfolgt anhand von Kriterien wie der kürzesten Fahrtstrecke, kurze Vorgewendefahrten, geringe Wartezeiten bei einem Überladevorgang und dergleichen. Dem aus der EP 1 602 267 A2 bekannten Routenplanungssystem liegt der Gedanke zu Grunde, eine geplante Fahrtroute an äußere Einflüsse anzupassen, um unter Berücksichtigung von Optimierungskriterien den Betreiber der landwirtschaftlichen Arbeitsmaschine von Rückführmanövern zu entlasten, um diese auf die geplante Fahrtroute zurückzuführen.

Die o.g. Verfahren bzw. Routenplanungssysteme erleichtern zwar die Arbeit des Bedieners des landwirtschaftlichen Maschinensystems bereits erheblich, da ihm mit Hilfe dieser Einrichtungen und Verfahren die Fahrt selbst auf langen Teilstrecken abgenommen wird. Dennoch muss der Bediener des Maschinensystems beim Wenden, d. h. insbesondere beim Ausfahren einer Nutzfahrspur und beim Einfahren in die neue Nutzfahrspur eine Vielzahl von Funktionen überwachen und steuern. So muss beim Ausfahren aus einer Nutzfahrspur nahezu immer das Bodenbearbeitungsgerät angehoben, ein anderer Gang eingelegt und die Geschwindigkeit geändert werden. Beim Wiedereinfahren in die neue Nutzfahrspur muss dann wieder der passende Gang eingelegt, die Geschwindigkeit angepasst und das Bodenbearbeitungsgerät abgesenkt werden. Der gesamte - von außen betrachtet oft relativ einfach aussehende - Arbeitsablauf gliedert sich dabei tatsächlich in eine Vielzahl von einzelnen Arbeitsschritten. So kann man beispielsweise eine komplette Arbeitsschrittsequenz, welche bei einem Wendemanöver durchzuführen ist, hier "Vorgewende-Arbeitsschrittsequenz" genannt, bei einem Schlepper mit einer Drillkombination aus Frontpacker, Kreisel, Egge und Drillmaschine in folgende einzelne Arbeitsschritte zergliedern:
1. Fronthubwerk ausheben.
2. Heckhubwerk ausheben.
3. Zapfwelle ausschalten.
4. Spuranzeige einklappen.
5. Differentialsperre ausschalten.
6. Gas wegnehmen.
7. Herunterschalten.

Anschließend erfolgt der eigentliche Wendevorgang. Beim Wiedereinfahren in die nächste Nutzfahrspur sind dann folgende einzelne Arbeitsschritte vorzunehmen:
1. Heckhubwerk absenken.
2. Zapfwette einschalten.
3. Gas geben.
4. Fronthubwerk absenken.
5. Spuranzeige absenken.
6. Hochschalten.
7. Differentialsperre einschalten.

Allein dieses Beispiel zeigt, dass ein solcher Wendevorgang eine erhebliche Übung sowie die volle Konzentration des Fahrers erfordert. Um den Fahrer von dieser Tätigkeit möglichst zu entlasten, sind seit einigen Jahren sog. "Vorgewende-Managementsysteme" (auch "Feldende-Managementsysteme" bzw. "Headland-Managementsysteme" genannt) auf dem Markt. Mit Hilfe solcher z. T. auch für Schlepper und andere landwirtschaftliche Maschinensysteme nachrüstbarer Vorgewende-Managementsysteme lassen sich Vorgewende-Arbeitsschrittsequenzen automatisch steuern. Üblicherweise können hierzu verschiedene Vorgewende-Arbeitsschrittsequenzen eingelernt werden, indem der Bediener das Vorgewende-Managementsystem in einen Lernmodus schaltet und dann ein Wendemanöver durchführt, wobei die einzelnen Arbeitsschritte vom Vorgewende-Managementsystem erfasst und gespeichert werden.

Ein Problem dieser Systeme besteht jedoch darin, dass sie entweder rein zeitgesteuert oder - wie ein in der EP 1 380 202 B1 beschriebenes automatisches Steuersystem - rein weggesteuert sind. Bei einer rein zeitabhängigen Steuerung wird die Arbeitsschrittsequenz zeitlich exakt so wieder "abgespielt", wie sie im Lernmodus aufgezeichnet wurde. Das heißt, das Maschinensystem muss immer in der gleichen Zeit das gesamte Wendemanöver durchlaufen. Bei einer wegabhängigen Steuerung werden die gespeicherten Operationen immer nach denselben Entfernungen abgespielt, wie sie gelernt wurden, unabhängig davon, ob sich das Maschinensystem mit derselben oder einer niedrigeren oder höheren Geschwindigkeit als im Lernmodus bewegt.

Beide Verfahren können jeweils gut verwendet werden, wenn die Wendemanöver zwischen zwei Nutzfahrspuren immer gleich verlaufen, d. h. wenn immer gleichartige Vorgewendefahrspuren abzufahren sind. Andererseits ist jedoch nicht davon auszugehen, dass die optimale Route zur Bearbeitung eines Schlages immer so aussieht, dass zwischen den einzelnen Nutzfahrspuren die Vorgewendefahrspuren gleich verlaufen. So kann es beispielsweise durchaus vorteilhaft sein, eine Bearbeitungsstrategie zu wählen, bei der die Reihenfolge der zu bearbeitenden Nutzfahrspuren auf dem Schlag nicht so gewählt wird, dass immer die gleiche Weglänge zwischen den Nutzfahrspuren zu fahren ist. Zudem können auch Hindernisse im Vorgewendebereich dazu führen, dass die Vorgewendefahrspur nicht wie geplant abgefahren werden kann.

Jede erhebliche Änderung der Vorgewendefahrspur bedeutet aber, dass die im Vorgewende-Managementsystem hinterlegten Vorgewende-Arbeitsschrittsequenzen nicht mehr mit der abzufahrenden Vorgewendefahrspur übereinstimmen und daher nicht verwendet werden können, ohne dass die Gefahr von Fehlern, im schlimmsten Fall sogar Unfällen, besteht. Dies bedeutet, dass es letztlich nicht möglich ist, unabhängig von der eingespeicherten Vorgewende-Arbeitsschrittsequenz eine optimale Route zu wählen und diese vollautomatisch abzufahren.

Es ist daher eine Aufgabe der vorliegenden Erfindung, ein Verfahren zur Steuerung eines landwirtschaftlichen Maschinensystems der eingangs genannten Art sowie ein automatisches Steuersystem zur Durchführung dieses Verfahrens zu schaffen, mit dem die o. g. Nachteile vermieden werden.

Diese Aufgabe wird durch ein Verfahren gemäß Patentanspruch 1 sowie durch ein automatisches Steuersystems gemäß Patentanspruch 10 gelöst.

Bei dem vorgeschlagenen erfindungsgemäßen Steuerungsverfahren wird die Vorgewende-Arbeitsschrittsequenz jeweils in Abhängigkeit von der aktuellen Position des Maschinensystems und in Abhängigkeit von der nachfolgend zu befahrenden Nutzfahrspur, insbesondere deren Standpunkt und deren Richtung, dynamisch aktualisiert und abgearbeitet, d. h. es werden nach einer Aktualisierung die jeweils verbleibenden Vorgewende-Arbeitsschritte gemäß der aktualisierten Arbeitsschrittsequenz abgearbeitet.

Mit Hilfe des erfindungsgemäßen Verfahrens kann nun dafür Sorge getragen werden, dass - unabhängig davon, wie die Vorgewendefahrspur letztlich aussieht - die Vorgewende-Arbeitsschrittsequenz immer mit dieser Vorgewendefahrspur synchronisiert ist und daher richtig abläuft. Die komplette Vorgewende-Arbeitsschrittsequenz kann dabei teilweise zeitabhängig, teilweise aber auch wegabhängig gesteuert sein. So kann definiert sein, dass an genau einer bestimmten Position bzw. in einem bestimmten Abstand nach dem Verlassen der "alten" Nutzfahrspur oder vor dem Einfahren in die "neue" Nutzfahrspur ein bestimmter Arbeitsschritt durchzuführen ist. Ebenso kann aber auch festgelegt werden, dass ein bestimmter Arbeitsschritt eine bestimmte Zeit dauern sollte. Dies ist insofern wichtig, als beispielsweise über die gleichen Hydraulikventile an einem Schlepper verschiedene Funktionen ausgelöst werden, je nachdem, welcher Anbau über einen Hydraulikanschluss dieses Hydraulikventils letztlich angeschlossen ist. Die verschiedenen Funktionen dauern in der Regel eine genau definierte Zeit. Um eine bestimmte Funktion auszuführen, ist daher dafür Sorge zu tragen, dass bei einem bestimmten Anbau das Hydraulikventil auch eine bestimmte Zeit lang betätigt wird. Dabei kann jedoch eine solche Zeitsteuerung ebenfalls dynamisch aktualisiert werden und davon abhängig sein, welche Arbeitsschritte vorher oder nachher durchgeführt worden sind. So ist beispielsweise der Öldruck in den Hydraulikleitungen höher, wenn die Motordrehzahl vor dem betreffenden Arbeitsschritt erhöht wurde. Es kann dann eine hydraulische Verstellung eines Anbauteils schneller erfolgen, und somit kann die Zeitdauer zur Betätigung des Hydraulikventils geringer sein, als wenn beispielsweise die Motordrehzahl erst nach dem betreffenden zeitgesteuerten Arbeitsschritt erhöht wird.

Bei der Aktualisierung der Vorgewende-Arbeitsschrittsequenz kann insbesondere beachtet werden, wie viel Zeit das Maschinensystem noch benötigt, um von der aktuellen Position zum Eintrittspunkt der nachfolgend zu befahrenden Nutzfahrspur zu gelangen, und wie viele Arbeitsschritte noch durchzuführen sind. Dementsprechend können Arbeitsschritte neu sortiert oder auch ganz weggelassen werden. So kann beispielsweise bei einer ursprünglich geplanten Vorgewende-Arbeitsschrittsequenz vorgesehen sein, dass beim Ausfahren aus einer Nutzfahrspur erst die Motordrehzahl verringert und dann das Schneidwerk angehoben wird und vor dem Einfahren in die neue Nutzfahrspur zunächst das Schneidwerk abgesenkt und dann die Motordrehzahl wieder erhöht wird. Sofern nun die Vorgewendefahrspur in dem konkreten Fall kürzer als geplant ist und daher nicht soviel Zeit zur Verfügung steht, wie dies bei der ursprünglich geplanten Vorgewende-Arbeitssehritksequenz der Fall ist, kann diese so aktualisiert werden, dass zunächst das Schneidwerk angehoben und dann die Motordrehzahl verringert wird, wenn das Maschinensystem die alte Nutzfahrspur verlässt und umgekehrt erst die Motordrehzahl erhöht wird und dann das Schneidwerk abgesenkt wird, wenn das Maschinensystem in die neue Nutzfahrspur einfährt. Dies hat den Vorteil, dass durch die höhere Motordrehzahl bei der Höhenverstellung des Schneidwerks der Öldruck höher ist und daher die Schneidwerkverstellung schneller erfolgen kann. Sofern nur eine sehr kurze Zeit beim Wenden zur Verfügung steht, kann die Vorgewende-Arbeitsschrittsequenz auch dahingehend aktualisiert werden, dass die Motordrehzahl überhaupt nicht heruntergestellt, sondern nur das Schneidwerk angehoben und wieder abgesenkt wird.

Eine Aktualisierung der Vorgewende-Arbeitsschrittsequenz kann bereits erfolgen, wenn sich das Maschinensystem noch in der vorhergehenden Nutzfahrspur befindet und sich durch eine Neuplanung der Vorgewendefahrspur, beispielsweise wegen einer geänderten Auswahl bezüglich der nachfolgenden Nutzfahrspur, ein Änderungsbedarf ergibt. Ebenso kann die Aktualisierung aber auch jederzeit während des Befahrens der Vorgewendefahrspur erfolgen, um passend zu reagieren, wenn der Bediener, beispielsweise wegen des Auftretens von Hindernissen oder bei Abrutschen im schlammigen Gelände, die vorgesehene Vorgewendefahrspur verlässt und damit die geplante Wendezeit nicht einhalten kann.

Durch das erfindungsgemäße Steuerungsverfahren wird es möglich, nahezu unabhängig von der von dem Vorgewende-Managementsystem ursprünglich geplanten, beispielsweise eingelernten Vorgewende-Arbeitsschrittsequenz eine optimale Route für das Maschinensystem zu planen und vollautomatisch abzufahren, wobei auch bei ungeplanten Ereignissen die Vorgewende-Arbeitsschrittsequenz in den meisten Fällen ohne weiteres Eingreifen des Fahrers vollautomatisch durchgeführt werden kann.

Für ein entsprechendes automatisches Steuersystem zur Steuerung eines landwirtschaftlichen Maschinensystems gemäß dem oben beschriebenen Verfahren sind folgende Komponenten erforderlich:
- eine Positionsdatenermittlungseinrichtung, um automatisch aktuelle Positionsdaten des Maschinensystems zu erfassen;
- ein Routenplanungssystem zur Erstellung einer Route für das Maschinensystem. Dieses Routenplanungssystem kann entweder in das Maschinensystem selbst integriert, beispielsweise in Form von Software auf einem Prozessor der Steuereinrichtung des Maschinensystems realisiert sein. Es kann sich aber auch um ein externes Routenplanungssystem handeln, beispielsweise auf einem Hofrechner. Es werden dann die geplanten Routen entweder mit Datenträgern oder per Funk an eine Steuereinrichtung des Maschinensystems übertragen. Diese Route enthält dann entsprechende Nutzfahrspuren, entlang deren das Maschinensystem bei der Bearbeitung des Territoriums vollautomatisch, halbautomatisch oder manuell gefahren wird. Darüber hinaus kann die Route auch vorgeplante Vorgewendefahrspuren enthalten, entlang deren das Maschinensystem jeweils von einer Nutzfahrspur zu einer nachfolgend zu befahrenden Nutzfahrspur gefahren wird;
- ein Vorgewende-Managementsystem, welches das Maschinensystem so steuert, dass zum Ende einer Nutzfahrspur und/oder während des Abfahrens einer nachfolgenden Vorgewendefahrspur und/oder zu Beginn einer nachfolgenden Nutzfahrspur vom Maschinensystem jeweils automatisch eine Vorgewende-Arbeitsschrittsequenz abgearbeitet wird, wobei das Vorgewende-Managementsystem erfindungsgemäß so ausgebildet ist, dass die Vorgewende-Arbeitsschrittsequenz jeweils in Abhängigkeit von der aktuellen Position des Maschinensystems und in Abhängigkeit von der nachfolgend zu befahrenden Nutzfahrspur dynamisch aktualisiert und abgearbeitet wird.

Es ist klar, dass ein solches automatisches Steuersystem auch entsprechende Speichermöglichkeiten für die geplanten Routen, insbesondere für die geplanten Nutzfahrspuren und die Vorgewendefahrspuren sowie für die geplanten und jeweils aktualisierten Vorgewende-Arbeitsschrittsequenzen umfasst.

Die abhängigen Ansprüche und die weitere Beschreibung enthalten besonders vorteilhafte Ausgestaltungen und Weiterbildungen der Erfindung, wobei das erfindungsgemäße automatische Steuersystem auch entsprechend den abhängigen Verfahrensansprüchen weitergebildet sein kann.

Bei einem besonders bevorzugten Ausführungsbeispiel wird jeweils in Abhängigkeit von der aktuell befahrenen Nutzfahrspur, der nachfolgend zu befahrenden Nutzfahrspur, den geographischen Daten eines Vorgewendebereichs sowie in Abhängigkeit von bestimmten Maschinenparametern des landwirtschaftlichen Maschinensystems eine Vorgewendefahrspur zwischen der aktuell befahrenen und der nachfolgend zu befahrenden Nutzfahrspur so ermittelt, dass das Maschinensystem optimal in die nachfolgend zu befahrende Nutzfahrspur einfädelt. Zu den geographischen Daten des Vorgewendebereichs gehören beispielsweise Informationen über die Abmessungen und die Lage des zur Verfügung stehenden Vorgewendebereichs selbst, welche sich beispielsweise beim Abernten eines Schlages aus dem SchlagAußenkantenverlauf und dem Bestandskantenverlauf zwischen dem Endpunkt der aktuell befahrenen Nutzfahrspur und dem Startpunkt der nachfolgend zu befahrenen Nutzfahrspur ergibt. Es können hierzu aber auch Informationen (Abmessungen und Lage) von im Vorgewendebereich befindlichen Hindernissen, Sicherheitszonen etc. gehören, welche vom Fahrzeug nicht befahren werden dürfen, Bei den Maschinenparametern handelt es sich in erster Linie um die Arbeitsbreite und/oder den Wendekreis des Maschinensystems. Darüber hinaus können aber auch andere Maschinenparameter berücksichtigt werden, insbesondere, wenn sie für einen Einfädelvorgang wesentlich sein können.

Vorzugsweise wird während des Abfahrens der Vorgewendefahrspur die Vorgewendefahrspur selbst jeweils in Abhängigkeit von der aktuellen Position des Maschinensystems ebenfalls dynamisch aktualisiert. D. h. wenn der Fahrer beispielsweise einem zuvor nicht bekannten Hindernis ausweichen muss oder das Fahrzeug im schlammigen oder abgeschrägten Gelände etwas verrutscht, wird sofort eine neue Vorgewendefahrspur ab der jeweiligen Position bis zum Eingang der nachfolgend zu befahrenden Nutzfahrspur berechnet, damit eine optimale Einfädelung des Maschinensystems in die zu befahrende Nutzfahrspur gesichert ist.

Das Steuerungsverfahren arbeitet somit insbesondere letztlich unabhängig davon, welche Nutzfahrspuren nacheinander angefahren werden. So kann grundsätzlich - wie das bei den meisten klassischen Abarbeitungsstrategien der Fall ist - immer die nächstmögliche danebenliegende Fahrspur gewählt werden. Ebenso kann aber auch eine beliebige andere im Rahmen der Routenplanung optimale gewählte Fahrspur angefahren werden. Insbesondere ist es auch jederzeit möglich, dass der Fahrer vorgibt, welche Fahrspur er als nächstes anfahren will, beispielsweise eine Fahrspur mit besonderen Eigenschaften wie eine Fahrspur, bei der ein Abtanken von gespeichertem Erntegut möglich ist, oder eine Fahrspur, an der eine bestimmte Erntegutqualität vorliegt. Ebenso kann der Fahrer auch eine bestimmte Fahrspur mit einer zuvor gesetzten Wegmarkierung anwählen. Durch die dynamische Aktualisierung der Vorgewendefahrspur kann der Fahrer dabei nicht nur während des Befahrens einer vorhergehenden Fahrspur, sondern auch noch während des Befahrens der geplanten Vorgewendefahrspur eine andere Fahrspur auswählen und so flexibel auf jedes Ereignis reagieren und anschließend eine neu berechnete, optimierte Route weiterfahren.

Besonders bevorzugt erfolgen bei der Erstellung der Route für das Maschinensystem die Auswahl bzw. die Anlegung der Nutzfahrspuren sowie die Reihenfolge, in der die Nutzfahrspuren abzufahren sind, in Abhängigkeit von bestimmten Parametern des Maschinensystems, insbesondere dessen Arbeitsbreite und/oder Wendekreis. Ebenso erfolgen besonders bevorzugt die Auswahl bzw. Anlegung der Nutzfahrspuren und die Wahl ihrer Reihenfolge in Abhängigkeit vom Verlauf möglicher Vorgewendefahrspuren zwischen den Nutzfahrspuren. Durch eine solche Rückkopplung zwischen Optimierung der Nutzfahrspuren zur Bearbeitung des Territoriums und möglichen Vorgewendefahrspuren kann sichergestellt werden, dass bei der Routenplanung nicht nur die Nutzfahrspuren an sich berücksichtigt werden, sondern auch die für das Abfahren der Vorgewendefahrspuren benötigten Zeiten und Strecken. Durch eine entsprechend geschickte Planung der Wendemanöver ist eine erhebliche Effizienzsteigerung möglich. Dabei ist, wie oben beschrieben, bei einer Fahrt entlang einer Nutzfahrspur die Reihenfolge, in der die noch nicht abgefahrenen Nutzfahrspuren abzufahren sind, jederzeit dynamisch aktualisierbar. Beispielsweise kann, wenn sich abzeichnet, dass der Korntank eines Mähdreschers voll und demnächst ein Abtanken erforderlich ist, die Reihenfolge der anzufahrenden Nutzfahrspuren so umsortiert werden, dass in der nächsten Nutzfahrspur ein Abtanken möglich ist.

Eine Vorgewendefahrspur zwischen zwei Fahrspuren lässt sich vorzugsweise relativ einfach unter Verwendung einzelner Wendebögen generieren, welche jeweils durch folgende Parameter definiert sind:
- einen Wendebogenmittelpunkt;
- einen Wenderadius, wobei z.B. der minimale mögliche Wenderadius des Maschinensystems angenommen wird;
- ein Bogenmaß, wobei dieses Bogenmaß z. B. durch einen Startwert und einen Endwert sowie eine Winkelrichtung oder durch einen Startwert und eine gerichtete Winkeldifferenz aus einem Startwert und einem Endwert gegeben werden kann;
- eine Fahrtrichtung entlang des Wendebogens;
- informationen über anschließende Wendebögen (inklusive die Wendebögen verbindende, gerade Zwischenstrecken).

Um eine komplette Vorgewendefahrspur zu bestimmen, sind zudem noch der Wendestartpunkt und der Wendeendpunkt jeweils mit der Orientierung, d. h. der Fahrtrichtung, erforderlich. Es müssen dann, beginnend am Wendestartpunkt bis zum Wendeendpunkt, die einzelnen Wendebögen mit den Zwischenstrecken zusammengesetzt werden, um die komplette Vorgewendefahrspur zu generieren.

Für das Wendemanöver kann beispielsweise innerhalb der Steuereinrichtung ein Wendemanöver-Planungsmodul, vorzugsweise in Form eines Softwaremoduls, realisiert sein. Damit dieses Wendemanöver-Planungsmodul nach dem zuvor beschriebenen Verfahren eine Vorgewendefahrspur generieren kann, benötigt es an einem Dateneingang zumindest folgende Parameter:
- Wendestartpunkt mit Spurendorientierung;
- Wendeendpunkt mit Spurendorientierung;
- Minimal möglicher Wenderadius des Maschinensystems, welcher automatisch abgefahren werden kann;
- Bestandskantenverlauf zwischen dem Wendestart- und Wendeendpunkt;
- Schlagaußenkantenverlauf.

Zudem müssen dem Wendemanöver-Planungsmodul Daten über eventuelle Hindernisse und die erforderlichen Sicherheitsabstände zur Verfügung gestellt werden. Vom Wendemanöver-Planungsmodul können dann die oben beschriebenen Daten zur Erzeugung der Wendebögen sowie die Fahrtrichtung des Maschinensystems ausgegeben werden. Diese Daten können dann beispielsweise an einen Lenkautomaten übergeben werden, der entsprechend die Startpunkte der Wendebögen anfährt und entsprechend dem Bogenmaß die Wendebögen in der richtigen Richtung abfährt und letztlich den Startpunkt der neuen Nutzfahrspur anfährt, so dass das Maschinensystem automatisch entlang der geplanten Vorgewendefahrspur gefahren wird.

Dabei kann das Maschinensystem, wie eingangs beschrieben, vollautomatisch entlang der Vorgewendefahrspur gefahren werden. Zusätzlich oder für ein manuelles bzw, halbautomatisches Verfahren des Maschinensystems entlang der Vorgewendefahrspur wird vorzugsweise auf einer Anzeigeeinrichtung in einem speziellen "Wendeanzeigemodus" dem Bediener des Maschinensystems die betreffende Vorgewendefahrspur angezeigt. Mit einer solchen Anzeige können die aktuell abgefahrene Nutzfahrspur, geplante "Soll-Nutzfahrspuren" und geplante Vorgewendefahrspuren dargestellt werden. Darüber hinaus lassen sich auch andere Nutzfahrspuren, beispielsweise die nächstmögliche Nutzfahrspur oder mit bestimmten weiteren Eigenschaften versehene Nutzfahrspuren, gesondert hervorheben. Zu den Nutzfahrspuren lassen sich weitere Informationen angeben, wie z. B. Spurnummern, ob die Fahrspur eine Wegmarkierung enthält, die Länge der Fahrspur und weitere vom Bediener eingestellte und ausgewählte Fahrspureigenschaften. Bei der Anzeigeorientierung und -skalierung sind folgende Methoden, Eigenschaften oder Einstellungen möglich:
- Die Anzeigeorientierung ist an die Fahrzeugorientierung gebunden (kontinuierlich oder in feste Winkelschritte gegliedert);
- Die Anzeigeorientierung ist an die aktuellen Nutzfahrspuren oder an die aktuelle Vorgewendefahrspur gebunden (kontinuierlich oder in feste Winkelschritte gegliedert);
- Die Anzeigeorientierung ist in Abhängigkeit von der Orientierungsabweichung der Fahrzeugorientierung zur geplanten Fahrspurorientierung gebunden;
- Die Anzeigeorientierung erfolgt in Anlehnung an eine Himmelsrichtung (fest auswählbar bzw, einstellbar);
- Die Skalierung der Anzeige erfolgt nach der Arbeitsbreite des Maschinensystems;
- Die Skalierung der Anzeige erfolgt in Abhängigkeit von der Länge der geplanten oder vorgeschlagenen Vorgewendefahrspur;
- Die Skalierung der Anzeige erfolgt in Abhängigkeit von einer Breite des Beets, auf dem das Maschinensystem aktuell arbeitet;
- Die Skalierung erfolgt in Abhängigkeit von der Schlaggröße;
- Die Skalierung der Anzeige erfolgt in Abhängigkeit der Position anderer Teilnehmer eines Arbeitseinsatzes, z. B. anderer Maschinen in einem Maschinenverband oder einem Überladewagen.

Vorzugsweise ist die Skalierung einstellbar bzw. manuell änderbar. So ist insbesondere eine Einstellung in einem festen Raster möglich.

Außerdem ist es möglich, für verschiedene Fahrfunktionen verschiedene Ausführungen zu wählen bzw. einzustellen oder fest vorzugeben.

Für eine solche Wendeanzeige kann in einer Fahrerkabine des Maschinensystems ein separates Display angeordnet sein. Es ist aber auch möglich, eine solche Wendeanzeige auf einem Display darzustellen, welches ansonsten für andere Anzeigen benutzt wird, beispielsweise für eine Gesamtfelddarstellung. Der Wechsel einer solchen Anzeige in einen Wendeanzeigemodus kann manuell oder vorprogrammiert erfolgen. Ein automatischer Anzeigewechsel ist beispielsweise bei entsprechender Programmierung möglich, sobald ein Nutzfahrspurende erkannt wird oder ein geplanter Vorgewendebereich innerhalb einer Soll-Route erreicht ist. Ein solcher Bereichswechsel kann beispielsweise erkannt werden, wenn mit Hilfe von Sensoren festgestellt wird, dass sich das Maschinensystem am Ende eines Bestands befindet. Ebenso kann aber auch ein Vergleich der jeweils aktuellen Positionsdaten mit in einer Speichereinrichtung hinterlegten kartographischen Daten des Schlags erfolgen, und die Anzeige schaltet um, sobald sich das Maschinensystem einer Schlagaußenkante bzw. einer Teilflächengrenze (Beetrand) oder Ähnlichem nähert.

Ebenso kann auch die Dauer des Erscheinens der Wendeanzeige an bestimmte Schlagbereiche bzw. an festgelegte oder einstellbare Zeitdauern, an Sensorsignale, an Signale, die durch die Lenkautomation generiert werden, oder andere Ereignisse gekoppelt sein.

Vorzugsweise werden bei einem halbautomatischen Modus vom Steuersystem bzw. dem Wendemanöver-Planungsmodul verschiedene mögliche Vorgewendefahrspuren zwischen einer aktuell abgefahrenen Nutzfahrspur und einer nachfolgend abzufahrenden Nutzfahrspur ermittelt und diese dem Bediener beispielsweise auf der Wendeanzeige zur Auswahl angezeigt. Der Bediener kann dann einen dieser Vorschläge auswählen oder eine geplante Vorgabe bestätigen.

Die Erfindung wird im Folgenden unter Hinweis auf die beigefügten Figuren anhand von Ausführungsbeispielen noch einmal näher erläutert. Hieraus ergeben sich auch weitere Einzelheiten und Vorteile der Erfindung. In den Figuren werden gleichartige Figurenbestandteile mit den gleichen Bezugsziffern versehen. Es zeigen:
Figur 1 eine schematische Darstellung eines landwirtschaftlichen Maschinensystems mit einem Ausführungsbeispiel eines erfindungsgemäßen Steuersystems,
Figur 2 eine Darstellung eines Ausschnitts eines Schlags mit mehreren Nutzfahrspuren und mehreren Vorgewendefahrspuren,
Figur 3 eine Darstellung eines Ausschnitts eines Schlags mit mehreren Nutzfahrspuren und zwei verschiedenen Vorgewendefahrspuren,
Figur 4 eine Darstellung eines Ausschnitts eines Schlags mit mehreren Nutzfahrspuren und einer Vorgewendefahrspur,
Figur 5 eine Darstellung eines Ausschnitts eines Schlags mit mehreren Nutzfahrspuren und einer Vorgewendefahrspur,
Figuren 6a und 6b eine schematische Darstellung eines Ausschnitts eines Schlages mit mehreren Nutzfahrspuren und zwei verschiedenen Varianten von Vorgewendefahrspuren, um in eine Nutzfahrspur einzufädeln,
Figur 7 eine Darstellung des Aufbaus einer Vorgewendefahrspur zwischen zwei Nutzfahrspuren und die hierfür benötigten Positionsdaten,
Figur 8 eine schematische Darstellung der zur Definition eines Wendebogens benötigten Positionsdaten,
Figur 9 ein Beispiel für eine mit Hilfe von zwei Wendebögen definierte 180°-Vorgewendefahrspur ohne Rückwärtsfahrt,
Figur 10 ein Beispiel für eine mit Hilfe von drei Wendebögen definierte 180°-Vorgewendefahrspur mit Rückwärtsfahrt.

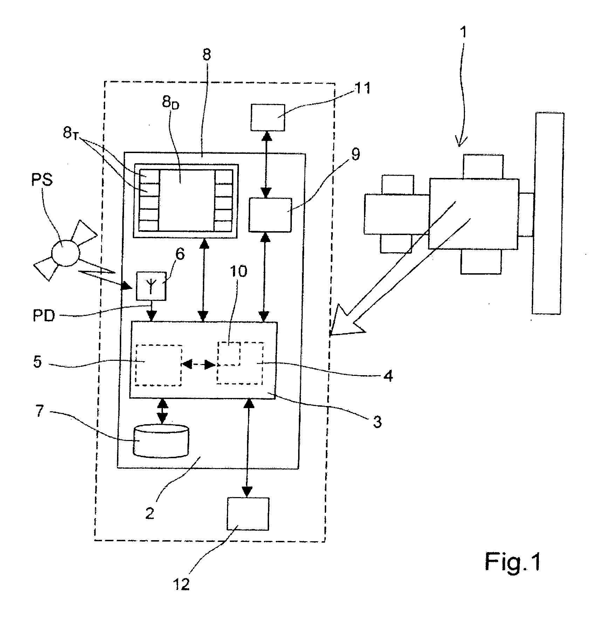

Bei dem in Figur 1 dargestellten landwirtschaftlichen Maschinensystem handelt es sich um einen Mähdrescher 1, welcher ein erfindungsgemäßes Steuersystem 2 aufweist. Der generelle Aufbau und die Funktionsweise eines Mähdreschers 1 sind dem Fachmann ebenso bekannt wie geeignete herkömmliche Steuerungssysteme. Daher sind in Figur 1 nur noch die zur Erläuterung der Erfindung wesentlichen Komponenten des Steuersystems 2 schematisch dargestellt.

Zu den wesentlichen Komponenten des Steuersystems 2 zählt hier zum einen eine Positionsermittlungseinrichtung 6, beispielsweise ein GPS-Empfänger, der von geeigneten Positionssatelliten PS GPS-Signale erhält. Vorzugsweise handelt es sich um einen GPS-Empfänger, welcher in einem korrigierten satellitengestützten System, beispielsweise mit DGPS oder Ähnlichem, arbeitet, um eine möglichst exakte Positionsbestimmung, bevorzugt auf wenige Zentimeter genau, durchzuführen.

Außerdem weist das Steuersystem 2 einen Prozessor 3 auf, auf dem ein Routenplanungssystem 4 und ein Vorgewende-Managementsystem 5 in Form von Softwaremodulen implementiert sind. Der prinzipielle Aufbau und die Funktionsweise solcher Routenplanungssysteme sind beispielsweise aus der EP 0 821 296 A1 und der DE 10 2004 0720 242 A2 bekannt, auf die hier voll inhaltlich verwiesen wird.

Das Routenplanungssystem 4 und das Vorgewende-Managementsystem 5 arbeiten hier erfindungsgemäß zusammen. Ein Teil des Routenplanungssystems 4 ist daher hier ein Wendemanöver-Planungsmodul 10, welches beispielsweise als eine Unterroutine innerhalb des Routenplanungssystems 4 realisiert sein kann. Dieses Wendemanöver-Planungsmodul 10 ist für die Planung der Vorgewendefahrspuren während der Feldbearbeitung verantwortlich und arbeitet insoweit mit dem Vorgewende-Managementsystem 5 zusammen. Über das Wendemanöver-Planungsmodul 10 können jederzeit Vorgewendefahrspuren aktualisiert werden. D. h. es können beispielsweise vom Vorgewende-Managementsystem 5 zunächst vorgegebene bzw. mit Hilfe des Vorgewende-Managementsystems 5 eingelernte Vorgewende-Arbeitsschrittsequenzen an die aktuelle zu durchfahrende Vorgewendefahrspur angepasst werden. Hierzu erhalten das Routenplanungssystem 4 und das Vorgewende-Managementsystem 5 unter anderem die aktuellen Positionsdaten PD von der Positionsermittlungseinrichtung 6.

Eine Speichereinrichtung 7 dient dazu, um geplante Routen mit sämtlichen Nutzfahrspuren und ggf, auch Vorgewendefahrspuren zu speichern. Ebenso können in dieser Speichereinrichtung 7 auch die eingelernten bzw. in sonstiger Weise vorgegebenen Vorgewende-Arbeitsschrittsequenzen hinterlegt sein. Die Speichereinrichtung kann außerdem alle notwendigen kartographischen Daten über das zu bearbeitende Territorium sowie die für die Planung notwendigen Maschinenparameter, Erntegutparameter oder andere für die Routenplanung, Spurführung und das Vorgewende-Managementsystem 5 erforderlichen Informationen enthalten.

An Stelle eines On-Board-Routenplanungssystems 4 kann auch ein auf einem Hofrechner befindliches Routenplanungssystem genutzt werden. In diesem Fall wird die fertige Route an das Steuersystem 2 des Mähdreschers 1 übertragen. Die fertige Route kann dann beispielsweise in der Speichereinrichtung 7 hinterlegt werden. Die Route besteht in diesem Fall vorzugsweise aus der Angabe der einzelnen Nutzfahrspuren mit Start- und Endpunkt, der Reihenfolge, wie diese Nutzfahrspuren zu durchfahren sind, und ggf. bereits vorgeplanten Vorgewendefahrspuren. Um bei der Bearbeitung jederzeit eine Aktualisierung zu erlauben, weist das Steuersystem 2 vorzugsweise auch in diesem Fall ein geeignetes Wendemanöver-Planungsmodul 10 auf. Dieses Wendemanöver-Planungsmodul 10 dient dann wie oben beschrieben dazu, während des Einsatzes die Vorgewendefahrspuren zu aktualisieren, um die ursprünglich vorgesehene Reihenfolge der zu durchfahrenden Nutzfahrspuren zu verändern oder von der vorgegebenen Route aus sonstigen Gründen, beispielsweise aufgrund von nicht eingeplanten Hindernissen, abweichen zu können. Alternativ oder zusätzlich kann das Maschinensystem auch permanent mit dem externen Routenplanungssystem z. B. per Funk in Datenaustausch stehen.

Vom Prozessor 3 aus sind zum einen Steuerungsmodule für die verschiedenen Arbeitsaggregate 12, beispielsweise hydraulische Pumpen, Ventile oder dergleichen, ansteuerbar, die hier schematisch nur in Form eines Blocks dargestellt sind. Die Arbeitsaggregate 12 werden dabei z. B. durch die Vorgaben des Vorgewende-Managementsystems 5 zum Abarbeiten einer Vorgewende-Arbeitsschrittsequenz gesteuert.

Außerdem ist der Prozessor 3 mit einem Lenkautomaten 9 gekoppelt, so dass das Maschinensystem 1 mit Hilfe dieses Lenkautomaten 9 automatisch die von dem Routenplanungssystem 4 bzw. dem Wendemanöver-Planungsmodul 10 vorgesehenen Nutzfahrspuren und Vorgewendefahrspuren abfahren kann. Der Lenkautomat 9 steht hierzu in Wechselwirkung mit den an dem Maschinensystem 1 üblicherweise vorhandenen Fahrsteuerungsaggregaten 11 wie Lenkung der Räder, Kupplung, Bremse etc. Diese Fahrsteuerungsaggregate 11 sind hier der Einfachheit halber auch nur als ein einzelner Block dargestellt.

Das Steuersystem 2 umfasst außerdem eine Benutzerschnittstelle 8, die mit dem Prozessor 3 gekoppelt ist. Diese Benutzerschnittstelle 8 besteht hier aus einem Touchdisplay mit einem Anzeigebereich 8_{D} und seitlich angeordneten Tasten 8_{T}, Wenn der Bediener das Display 8 im Bereich der virtuell dargestellten Tasten 8_{T} berührt, kann er bestimmte Eingaben tätigen bzw. bestimmte Aktionen ausführen.

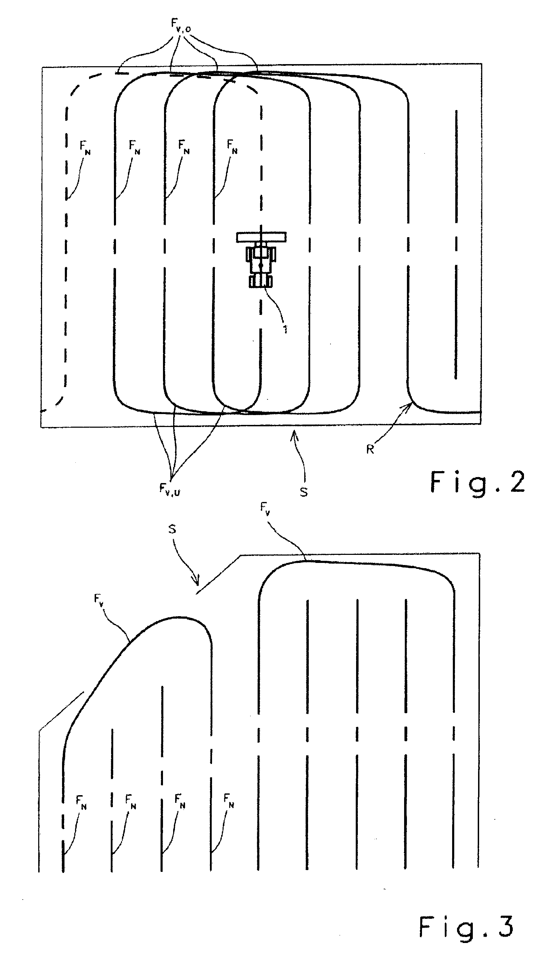

Im Folgenden wird anhand der Figuren 2 bis 10 die Arbeitsweise eines Maschinensystems 1 mit einem derartigen Steuersystem 2 erläutert:

Figur 2 zeigt mehrere Nutzfahrspuren F_{N} auf einem Schlag S sowie die Vorgewendefahrspuren F_{V,O}, F_{V,U} die ein Mähdrescher 1 abfahren muss, um von einer Nutzfahrspur F_{N} in die nachfolgende Nutzfahrspur F_{N} zu gelangen. Die Arbeitsstrategie ist hier so gewählt, dass der Mähdrescher 1 bei einem Wendemanöver abwechselnd mal drei Fahrspuren (in Figur 2 die oberen Vorgewendefahrspuren F_{V,O}) und mal zwei Nutzfahrspuren F_{N} (in Figur 2 die unteren Vorgewendefahrspuren F_{V,U}) überspringt. Wenn der Mähdrescher 1 die geplante Route R abfährt, muss er also wechselweise unterschiedlich lange Vorgewendefahrspuren F_{V,O}, F_{V,U} abfahren.

An diesem Beispiel wird bereits klar, dass ein Vorgewende-Managementsystem, bei dem die verschiedenen Arbeitsschritte innerhalb einer Vorgewende-Arbeitsschrittsequenz in einer festen Zeitabfolge oder nach festgelegten abgefahrenen Streckenanschnitten aufeinander folgen, für solche Zwecke nicht besonders gut geeignet ist. Eine typische Vorgewende-Arbeitsschrittsequenz für einen Mähdrescher 1 könnte beispielsweise im einfachsten Fall so aussehen, dass beim Ausfahren aus dem Feld, d. h. am Ende einer Nutzfahrspur F_{N}, zunächst die Motordrehzahl verringert wird, dann das Mähwerk angehoben wird, anschließend zum Befahren der Vorgewendefahrspur ein anderer Gang eingelegt wird und der gesamte Prozess wieder umgekehrt abläuft, bevor der Mähdrescher wieder in die nachfolgende Nutzfahrspur F_{N} einfährt. Würde eine solche Vorgewende-Arbeitsschrittsequenz an einer der oberen Vorgewendefahrspuren F_{V,O} eingelernt, so wäre der Zeitablauf für die unteren Vorgewendefahrspuren F_{V,U} am unteren Schlagrand zu lang. Dies würde dazu führen, dass beispielsweise das Mähwerk des Mähdreschers 1 noch nicht wieder abgesenkt ist, wenn der Mähdrescher 1 bereits in die nachfolgende Nutzfahrspur F_{N} einfährt. Würde umgekehrt die Vorgewende-Arbeitsschrittsequenz an einer Vorgewendefahrspur F_{V,U} am unteren Schlagende eingelernt, so würden die einzelnen Arbeitsschritte für die Vorgewendefahrspuren F_{V,O} am oberen Schlagrand zu schnell ablaufen, d. h. das Mähwerk würde beispielsweise viel zu früh wieder abgesenkt, bevor der Mähdrescher 1 in die nachfolgende Nutzfahrspur F_{N} einfährt. Dies könnte zu ungünstigen Situationen bis hin zu Unfällen im Vorgewendebereich führen.

Dieses Problem ließe sich bei einer Route, wie sie in Figur 2 dargestellt ist, und bei einem Schlag S mit entsprechend geraden Kantenverläufen noch dadurch lösen, dass für die Vorgewendefahrspuren F_{V,O}, F_{V,U} am oberen und unteren Schlagrand jeweils zwei verschiedene Vorgewende-Arbeitsschrittsequenzen eingelernt werden und vom Fahrer jeweils am Ende einer Nutzfahrspur F_{N} die richtige Vorgewende-Arbeitsschrittsequenz ausgewählt wird, indem er einen entsprechenden Startknopf drückt.

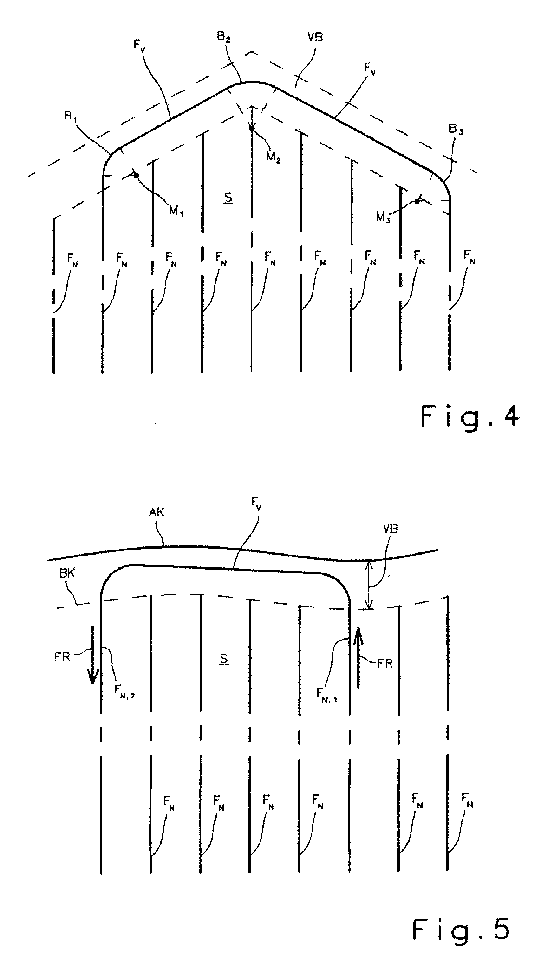

Diese Lösung eignet sich jedoch nicht mehr, wenn die Außenkanten des Schlags S bzw. die Bestandsfläche nicht gradlinig verlaufen, wie dies in Figur 3 und in Figur 4 dargestellt ist. Diese Figuren zeigen, wie beim Überspringen von Nutzfahrspuren F_{N} die Vorgewendefahrspuren F_{V} unterschiedliche Streckenverläufe aufweisen müssen, damit das Maschinensystem entlang der Bestandsgrenze im Vorgewendebereich VB von der vorhergehenden Nutzfahrspur zur nachfolgenden Nutzfahrspur gelangen kann.

Aus diesem Grund wirkt bei dem in Figur 1 dargestellten Steuersystem das Vorgewende-Managementsystem 5 mit einem Wendemanöver-Planungsmodul WMP 10 geeignet zusammen, so dass die Vorgewende-Arbeitsschrittsequenz mit der tatsächlich abzufahrenden Vorgewendefahrspur F_{V} synchronisiert ist, unabhängig davon, wie die Vorgewendefahrspur F_{V} letztlich aussieht. Entscheidend bei dieser Synchronisierung ist, dass die einzelnen Arbeitsschritte jeweils an den passenden Arbeitsstellen nach dem Ausfahren aus einer Nutzfahrspur bzw. die umgekehrte Arbeitsschrittfolge wieder rechtzeitig, aber nicht zu früh, vor dem Einfahren in die neue Nutzfahrspur erfolgt. Hierzu werden jeweils auf Basis der aktuell abzufahrenden Vorgewendefahrspur, d. h letztlich in Abhängigkeit von der aktuellen Position des Maschinensystems sowie vom Startpunkt und der Richtung der neuen Nutzfahrspur die voraussichtlich zur Verfügung stehende Strecke und die voraussichtlich zur Verfügung stehende Zeit bis zum Wiedereinfahren in die neue Fahrspur berechnet und entsprechend vom Vorgewende-Managementsystem eine ursprünglich vorgegebene Vorgewende-Arbeitsschrittsequenz angepasst. Diese ursprünglich vorgegebene Arbeitsschrittsequenz kann wie bei den herkömmlichen Systemen beispielsweise durch Abfahren eines Wendemanövers in einem Lernmodus eingelernt werden. Es ist grundsätzlich aber auch möglich, diese Arbeitsschrittsequenz zuvor manuell einzugeben, z. B. an einem Hofrechner oder dergleichen vorab zu planen und dann an das Vorgewende-Managementsystem zu übergeben.

Beim Abfahren der Vorgewendefahrspur wird hierzu regelmäßig die aktuelle Position des Maschinensystems überprüft und so kalkuliert, wie lang die Reststrecke bis zum Wiedereintritt in die nachfolgende Fahrspur ist und wie viel Zeit hierfür noch zur Verfügung steht. Sofern irgendwelche relevanten Abweichungen von den geplanten Daten auftreten, wird von dem Vorgewende-Managementsystem umgehend die Vorgewende-Arbeitsschrittsequenz so modifiziert, dass der Ablauf der einzelnen Arbeitsschritte, soweit dies möglich ist, wieder mit der aktuellen Fahrspur synchronisiert ist. Hierzu werden ggf. auch Arbeitsschritte innerhalb der Arbeitsschrittsequenz in ihrer Reihenfolge vertauscht oder auch, sofern dies möglich ist, ganz weggelassen.

Um auf alle Ereignisse flexibel reagieren zu können, ist es - wie bereits oben erläutert - mit dem Steuersystem 2 möglich, jederzeit eine Route R umzuplanen, insbesondere, indem spontan die Reihenfolge geändert wird, in der die einzelnen Nutzfahrspuren F_{N} anzufahren sind. In diesem Fall müssen dann entsprechend neue Vorgewendefahrspuren F_{V} geplant werden, um die einzelnen Nutzfahrspuren F_{N} in der gewünschten Reihenfolge anfahren zu können. Wie in Figur 5 gezeigt wird, ist es hierzu erforderlich, dass das Steuersystem 2, d. h. das Wendemanöver-Planungsmodul 10, den zur Verfügung stehenden Vorgewendebereich VB kennt. Dieser Vorgewendebereich VB ist z. B. für eine Erntemaschine durch die Außenkante AK des Schlags S und die Bestandskante BK definiert. Die Daten für diesen Vorgewendebereich VB sind beispielsweise in einer Karte in der Speichereinrichtung 7 hinterlegt. Weitere Informationen, die über den Vorgewendebereich VB benötigt werden, sind Informationen über Hindernisse wie Telegraphenmasten oder Hecken oder dergleichen, vorgegebene Sperrbereiche sowie Sicherheitsbereiche, in denen beispielsweise ein automatisches Fahren nicht erlaubt ist. Solche Sicherheitsbereiche können an öffentliche Verkehrswege angrenzende Vorgewendebereiche sein, aber auch Bereiche, in denen beispielsweise durch zu starken Waldbestand ein GPS-Signal nicht gut empfangen werden und daher das Positionssystem nicht genau und sicher genug arbeiten kann. Auf Basis dieser Daten kann, wie noch später detaillierter erläutert wird, eine Vorgewendefahrspur F_{V} ermittelt werden um sicher durch den Vorgewendebereich in einer Fahrtrichtung FR von einer aktuell befahrenen, "alten" Nutzfahrspur F_{N,1}in die nachfolgend abzufahrende "neue" Nutzfahrspur F_{N,2} zu kommen.

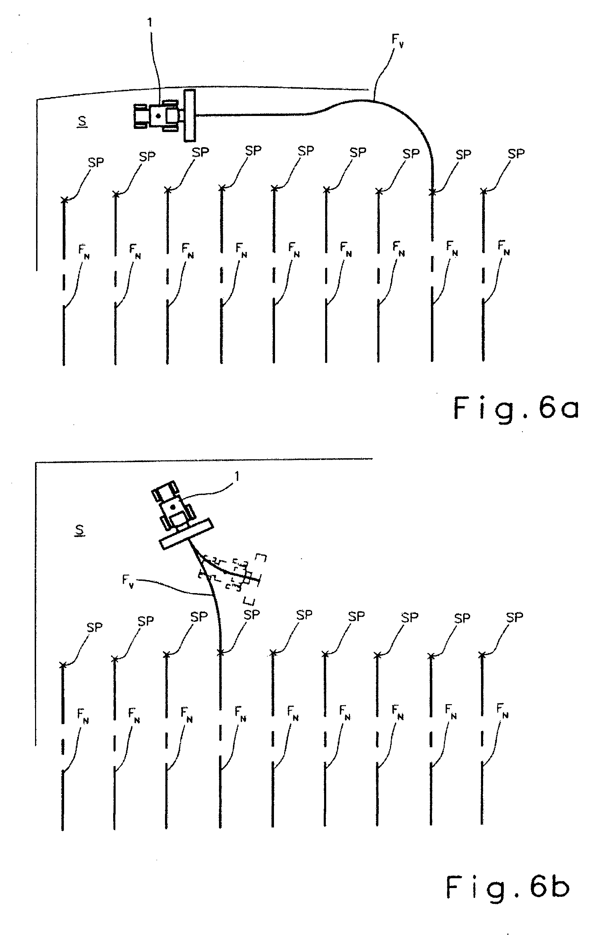

Bei der Planung der Vorgewendefahrspur F_{V} ist insbesondere darauf zu achten, dass das Maschinensystem richtig in die jeweilige anzufahrende Nutzfahrspur F_{N,1} einfädelt, d. h. beispielsweise nicht schräg einfährt. Je nach Wendekreis des Maschinensystems kann daher für die Einfahrt in die neue Fahrspur F_{N} eine etwas aufwändigere Vorgewendespur F_{V} zu wählen sein. In den Figuren 6a und 6b sind hierzu als Beispiel zwei Möglichkeiten dargestellt, um im richtigen Eintrittswinkel in eine Nutzfahrspur F_{N} einzufahren. Gezeigt ist hier jeweils nur ein Ausschnitt eines Schlags S mit einem Teil einer Reihe von Nutzfahrspuren F_{N}. Markiert sind außerdem die Startpunkte SP an den einzelnen Nutzfahrspuren F_{N}. Damit das Maschinensystem 1 korrekt in die jeweilige Nutzfahrspur F_{N} einfädelt, muss das Maschinensystem 1 am Startpunkt SP der betreffenden Nutzfahrspur F_{N} mit der richtigen Orientierung ankommen.

Figur 6a zeigt eine erste Möglichkeit, dies sicherzustellen, indem die Vorgewendefahrspur F_{V} so gewählt wird, dass das Maschinensystem 1 rechtzeitig vor dem Startpunkt SP der Fahrspur F_{N}, in welche das Maschinensystem 1 einfädeln möchte, noch einmal ausholt, d. h. einen Bogen mit einem größeren Wenderadius fährt.

Figur 6b zeigt eine andere Variante, bei der die Vorgewendefahrspur F_{V} so gewählt wird, dass das Maschinensystem 1 zunächst in der Fahrtrichtung entlang des Vorgewendebereichs parallel zur Bestandskante ein Stück über den Startpunkt SP der betreffenden Nutzfahrspur F_{N} hinausfährt und dann in einem Bogen zurücksetzt, um sich in eine passende Position zur Einfädelung in die Fahrspur F_{N} zu bringen.

Welche Variante gewählt wird, hängt in der Regel von den Platzverhältnissen innerhalb des Vorgewendebereichs ab. Vorzugsweise werden dem Bediener des Maschinensystems jeweils eine bevorzugte, optimale Route sowie eine oder mehrere Alternativen vorgeschlagen, und der Bediener kann dann die bevorzugte optimale Route bestätigen oder eine Alternative wählen, wenn ihm diese geeigneter erscheint. Es wird dann vom Vorgewende-Managementsystem, wie zuvor beschrieben, eine Vorgewende-Arbeitsschrittsequenz an die vom Bediener bestätigte bzw. ausgewählte Vorgewendefahrspur angepasst.

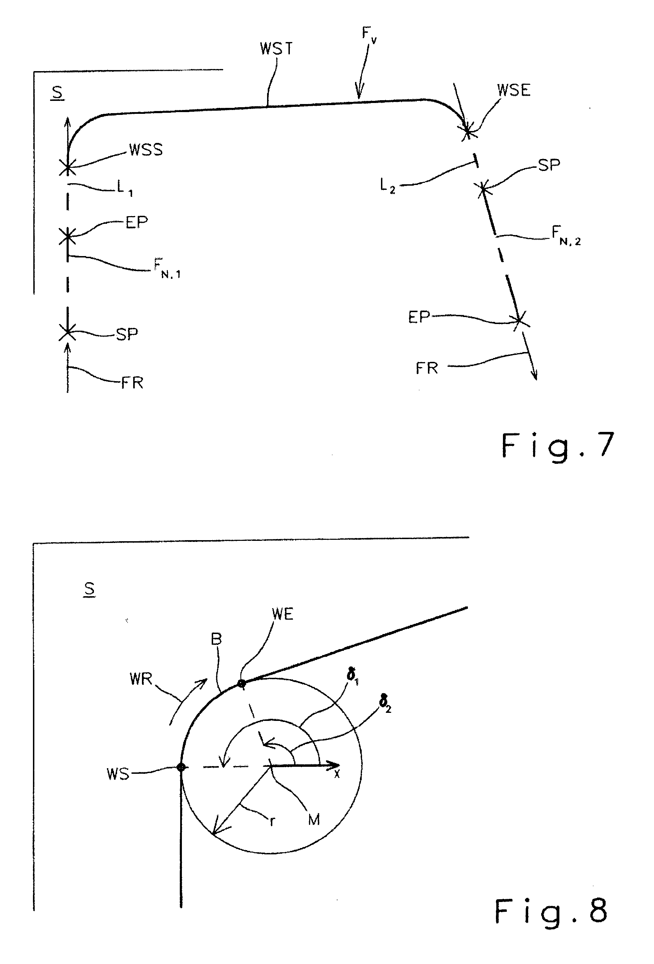

Anhand der Figuren 7 bis 10 wird ersichtlich, welche Parameter zur Definition einer Vorgewendefahrspur F_{V} erforderlich sind. Das Maschinensystem muss hier von einer vorhergehenden Nutzfahrspur F_{N,1} zu einer nachfolgenden Nutzfahrspur F_{N,2} gelangen und dort richtig einfädeln. Die Nutzfahrspuren F_{N,1'} F_{N,2} sind hier stark verkürzt dargestellt. Als Daten zur Festlegung dieser Nutzfahrspuren F_{N,1}, F_{N,2} benötigt das Steuersystem an sich lediglich die Startpunkte SP und Endpunkte EP und die Fahrtrichtung FR, in die sich das Maschinensystem bewegen soll. Dabei ist durch die Fahrtrichtung FR festgelegt, welcher Punkt am Ende einer Nutzfahrspur F_{N,1}, F_{N,2} eigentlicher Startpunkt SP und welcher der Endpunkt EP ist. Diese Eigenschaft ist folglich austauschbar. Das Steuersystem benötigt nur die Koordinaten der Punkte, wenn die Fahrtrichtung FR bekannt ist.

Die gesamte Vorgewendestrecke F_{V} setzt sich dann zusammen aus den Ein-und Ausfahrstrecken L₁, L₂, in denen sich das Maschinensystem 1 noch gradlinig vom Endpunkt EP der alten Nutzfahrspur F_{N,1} wegbewegt bzw. auf den Startpunkt SP der neuen Nutzfahrspur F_{N,2} zubewegt, um gerade aus dem Feld herauszufahren bzw. gerade in die neue Nutzfahrspur F_{N,2} einzufädeln. Diese Aus- und Einfahrstrecken L₁, L₂ können je nach Maschinensystem unterschiedlich lang sein. An diese Ein- bzw. Ausfahrstrecken L₁, L₂ schließt sich die eigentliche Wendestrecke WST an, entlang deren die Orientierung des Maschinensystems geändert wird. Die entscheidenden Parameter zur Definition dieser Wendestrecke WST sind zum einen der Wendestreckenstartpunkt WSS und der Wendestreckenendpunkt WSE, wobei wieder - wie oben erläutert - die durch die Fahrtrichtung FR vorgegebene Orientierung wesentlich ist.

Die eigentliche Wendestrecke WST kann dann durch einzelne Wendebögen definiert sein. Ein solcher Wendebogen B ist in Figur 8 dargestellt und lässt sich beispielsweise durch nachfolgende Parameter definieren, zum einen durch den Bogenmittelpunkt M und den Wenderadius r des Wendebogens B. Zum anderen wird noch ein Bogenmaß benötigt, d. h. es muss festgelegt werden, welches Winkelsegment der jeweilige Wendebogen B erfasst, um so den Wendestartpunkt WS und den Wendeendpunkt WE des Wendebogens B zu bestimmen. Dies erfolgt in dem in Figur 8 dargestellten Ausführungsbeispiel durch die Angabe zweier Winkel δ₁, δ₂, wobei der erste Winkel δ₁ den Winkel zwischen einem Normvektor x und dem Vektor vom Bogenmittelpunkt M zum Wendestartpunkt WS und der zweite Winkel δ₂ den Winkel zwischen dem Normvektor x und dem Vektor vom Bogenmittelpunkt M zum Wendeendpunkt WE angibt. Bei diesem Ausführungsbeispiel werden folglich der Wendestartpunkt WS des Bogens B und der Wendeendpunkt WE jeweils in Form von auf den Bogenmittelpunkt M bezogenen Polarkoordinaten definiert. Grundsätzlich ist es aber auch möglich, den Wendestartpunkt WS und den Wendeendpunkt WE in anderen Koordinaten festzulegen. Außerdem muss die Bogenfahrtrichtung WR feststehen, d. h. in welcher Richtung der Bogen vom Maschinensystem abgefahren wird.

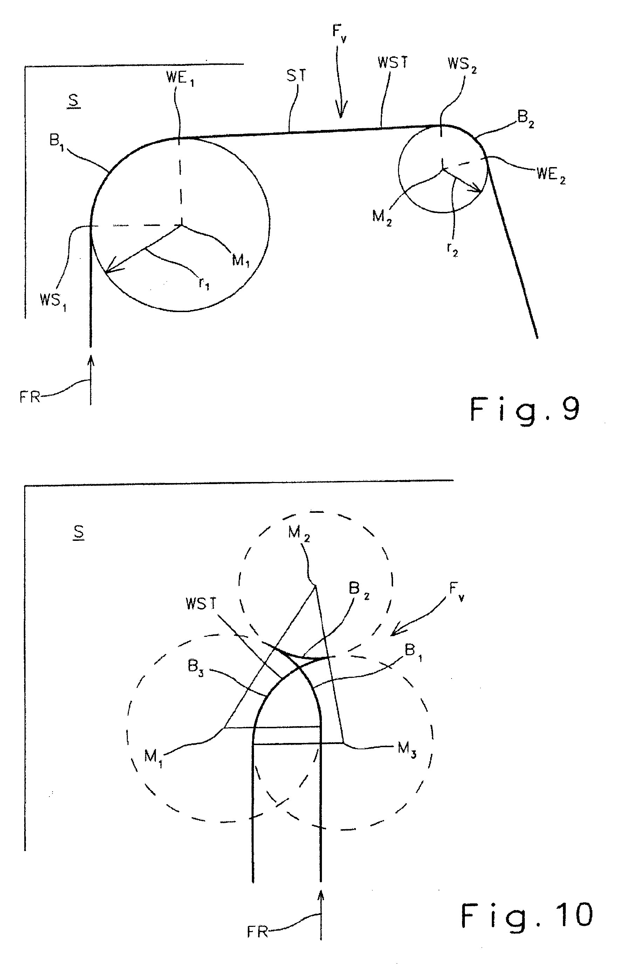

Die Figuren 9 und 10 zeigen, wie mit Hilfe solcher Wendebögen B komplette Wendestrecken WST bzw. Vorgewendefahrspuren F_{V} definierbar sind.

Figur 9 zeigt dabei eine einfache 180°-Wende, bei der das Maschinensystem die Wende in einem Zug, d. h. ohne Rückwärtsfahrt, durchführt, wie dies z. B. auch in Figur 7 vorgesehen ist. Angegeben werden müssen hier nur die Parameter der beiden Wendebögen B₁, B₂, d. h. deren Bogenmittelpunkte M₁, M₂ und Radien r₁, r₂ sowie die zugehörigen Wendestartpunkte WS₁, WS₂ und Wendeendpunkte WE₁, WE₂. Der Streckenabschnitt ST zwischen den Wendebögen B₁, B₂ sowie die Ausfahr- und Einfahrspuren in die Nutzfahrspuren (hier nicht dargestellt) ergeben sich dann dadurch, dass die Wendestartpunkte WS₁, WS₂ und Wendeendpunkte WE₁, WE₂ der Bögen B₁, B₂ sowie die Endpunkte der Nutzfahrspuren und die Fahrtrichtung FR bekannt sind. Es reicht also, wenn das Wendemanöver-Planungsmodul 10 die einzelnen Daten der Wendebögen B₁, B₂ sowie die Start- und Endpunkte EP der beteiligten Nutzfahrspuren und die Fahrtrichtung FR festlegt und dem Lenkautomaten zur Verfügung stellt.

Figur 10 zeigt ein weiteres Beispiel, wie mit drei Wendebögen B₁, B₂, B₃ mit den Mittelpunkten M₁, M₂, M₃ eine Vorgewendefahrspur F_{V} für eine 180°-Wende mit Rückwärtsfahrt definiert wird. Das Maschinensystem fährt hier zunächst entlang des ersten Bogens B₁ vorwärts aus der vorhergehenden Nutzfahrspur aus, setzt dann entlang des Wendebogens B₂ zurück und fährt entlang des dritten Wendebogens B₃ wieder in die unmittelbar neben der alten Nutzfahrspur liegende neue Nutzfahrspur ein. Der Vergleich mit Figur 9 zeigt, dass hierfür erheblich weniger Platz benötigt wird als wenn das Maschinensystem die neue Nutzfahrspur F_{N} in einem Durchgang, d. h. ohne Rückwärtsfahrt, anfährt. Jedoch ist eine Rückwärtsfahrt mit einem erheblich größeren Zeitaufwand verbunden, so dass immer abgewogen werden muss, weiches Wendemanöver vorteilhafter ist.

Aus Figur 4 ist auch noch einmal zu ersehen, dass z. B. mit drei Wendebögen B₁, B₂, B₃ auch Vorgewendefahrspuren F_{V} in Vorgewendebereichen VB mit komplizierten kartographischen Abmessungen problemlos und einfach definiert werden können.

Durch die erfindungsgemäße dynamische Aktualisierung der Vorgewende-Arbeitsschrittsequenz in Abhängigkeit vom konkreten, tatsächlichen Verlauf einer aktuellen Vorgewendefahrspur können die einzelnen Arbeitsschritte immer synchronisiert zur Vorgewendefahrspur durchgeführt werden. Manuelle Tätigkeiten des Bedieners können so auf ein Mindestmaß begrenzt werden. Selbstverständlich ist das System aus Sicherheitsgründen jedoch so ausgelegt, dass der Bediener eine vollautomatische Steuerung jederzeit auch manuell übersteuern kann.

Es wird abschließend noch einmal darauf hingewiesen, dass es sich bei den in den Figuren dargestellten Maschinensystemen und Steuersystemen sowie den im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Es wird außerdem der Vollständigkeit halber darauf hingewiesen, dass die Verwendung der unbestimmten Artikel "ein"" bzw. "eine" nicht ausschließt, dass die betreffenden Merkmale auch mehrfach vorhanden sein können.

### Bezugszeichenliste

- 1: Maschinensystem / Mähdrescher
- 2: Steuersystem
- 3: Prozessor
- 4: Routenplanungssystem
- 5: Vorgewende-Managementsystem
- 6: Positionsermittlungseinrichtung
- 7: Speichereinrichtung
- 8: Benutzerschnittstelle
- 8_{D}: Anzeigebereich
- 8_{T}: Tasten
- 9: Lenkautomat
- 10: Wendemanöver-Planungsmodul
- 11: Fahrsteuerungsaggregate
- 12: Arbeitsaggregat
- PS: Positionssateliit
- PD: Positionsdaten
- S: Schlag
- R: Route
- F_{N}: Nutzfahrspur
- EP: Endpunkt der Nutzfahrspur
- SP: Startpunkt der Nutzfahrspur
- F_{V}: Vorgewendefahrspur
- F_{V,U}: untere Vorgewendefahrspur
- F_{V,O}: obere Vorgewendefahrspur
- F_{N,1}: aktuelle Nutzfahrspur
- F_{N,2}: anzufahrende Nutzfahrspur
- VB: Vorgewendebereich
- BK: Bestandskante
- AK: Außenkante
- FR: Fahrtrichtung
- WST: Wendestrecke
- WSE: Wendestreckenendpunkt
- WSS: Wendestreckenstartpunkt
- L₁: Ausfahrstrecke
- L₂: Einfahrstrecke
- ST: Streckenabschnitt
- B: Wendebogen
- M: Bogenmittelpunkt
- r: Radius
- WS: Wendestartpunkt
- WE: Wendeendpunkt
- δ₁: Winkel,
- δ₂: Winkel
- x: Normvektor
- WR: Bogenfahrtrichtung
- B₁, B₂, B₃: Wendebögen
- M₁, M₂, M₃: Bogenmittelpunkte
- r₁, r₂: Radien
- WS₁, WS₂: Wendestartpunkte
- WE₁, WE₂: Wendeendpunkte

## Patentansprüche

1. Verfahren zur Steuerung eines landwirtschaftlichen Maschinensystems (1) bei der Bearbeitung eines zu bearbeitenden Territoriums (S), bei dem eine Route (R) für das Maschinensystem (1) erstellt wird, welche Nutzfahrspuren (FN) umfasst, entlang deren das Maschinensystem (1) bei der Bearbeitung des Territoriums (S) gefahren wird, und welche Vorgewendefahrspuren (FV) umfasst, entlang derer, das Maschinensystem (1) jeweils von einer Nutzfahrspur (FN) zu einer nachfolgend zu befahrenden Nutzfahrspur (FN) gefahren wird, wobei zum Ende einer Nutzfahrspur (FN) und/oder während des Abfahrens einer nachfolgenden Vorgewendefahrspur (FV) und/oder zu Beginn einer nachfolgenden Nutzfahrspur (FN) vom Maschinensystem (1) jeweils automatisch eine Vorgewende-Arbeitsschrittsequenz abgearbeitet wird,
**dadurch gekennzeichnet,**
**dass** die Vorgewende-Arbeitsschrittsequenz jeweils in Abhängigkeit von der aktuellen Position des Maschinensystems (1) und in Abhängigkeit von der nachfolgend zu befahrenden Nutzfahrspur (FN) dynamisch aktualisiert, mit der Vorgewendefahrspur (FV) synchronisiert und abgearbeitet wird.

2. Verfahren nach Anspruch 1, **dadurch gekennzeichnet, dass** jeweils in Abhängigkeit von
- der aktuell befahrenen Nutzfahrspur (F_{N}),
- der nachfolgend zu befahrenden Nutzfahrspur (F_{N}),
- den geographischen Daten eines Vorgewendebereichs (V),
- und bestimmten Maschinenparametern des landwirtschaftlichen Maschinensystems (1)
eine Vorgewendefahrspur (Fv) zwischen der aktuell befahrenen und der nachfolgend zu befahrenden Nutzfahrspur (F_{N}) so ermittelt wird, dass das Maschinensystem (1) optimal in die nachfolgend zu befahrende Nutzfahrspur (F_{N}) einfädelt.

3. Verfahren nach Anspruch 2, **dadurch gekennzeichnet, dass** während des Abfahrens der Vorgewendefahrspur (F_{V}) diese in Abhängigkeit von der aktuellen Position des Maschinensystems (1) dynamisch aktualisiert wird.

4. Verfahren nach einem der Ansprüche 1 bis 3, **dadurch gekennzeichnet, dass** bei der Erstellung der Route (R) für das Maschinensystem die Nutzfahrspuren (F_{N}) und die Reihenfolge, in der die Nutzfahrspuren (F_{N}) abzufahren sind, in Abhängigkeit von bestimmten Maschinenparametern und/oder in Abhängigkeit des Verlaufs von möglichen Vorgewendefahrspuren (F_{V}) zwischen den Nutzfahrspuren gewählt werden.

5. Verfahren nach Anspruch 4, **dadurch gekennzeichnet, dass** bei einer Fahrt entlang einer Nutzfahrspur (F_{N}) die Reihenfolge, in der die noch nicht abgefahrenen Nutzfahrspuren (F_{N}) abzufahren sind, dynamisch aktualisiert wird.

6. Verfahren nach einem der Ansprüche 2 bis 5, **dadurch gekennzeichnet, dass** die bei der Ermittlung der Nutzfahrspuren (F_{N}) und/oder der Reihenfolge der Nutzfahrspuren (F_{N}) und/oder der Vorgewendefahrspuren (F_{V}) berücksichtigten Maschinenparameter eine Arbeitsbreite und/oder einen Wendekreis des Maschinensystems (1) umfassen.

7. Verfahren nach einem der Ansprüche 2 bis 6, **dadurch gekennzeichnet, dass** eine Vorgewendefahrspur (F_{V}) zwischen der aktuell befahrenen und der nachfolgend zu befahrenden Nutzfahrspur (F_{N}) unter Verwendung einzelner Wendebögen (B, B₁, B₂, B₃) generiert wird, welche jeweils durch folgende Parameter definiert sind:
- einen Wendebogenmittefpunkt (M, M₁, M₂, M₃),
- einen Wenderadius (r),
- ein Bogenmaß (δ₁, δ₂),
- eine Fahrtrichtung (WR) entlang des Wendebogens (B, B₁, B₂, B₃),
- Information über anschließende Wendebögen (B₁, B₂, B₃).

8. Verfahren nach einem der Ansprüche 1 bis 7, **dadurch gekennzeichnet, dass** das Maschinensystem (1) vollautomatisch entlang einer Vorgewendefahrspur (F_{V}) gefahren wird.

9. Verfahren nach einem der Ansprüche 1 bis 8, **dadurch gekennzeichnet, dass** einem Bediener des Maschinensystems (1) zum Abfahren einer Vorgewendefahrspur (F_{V}) auf einer Anzeigeinrichtung (8_{D}) in einem Wendeanzeigemodus die betreffende Vorgewendefahrspur (F_{V}) angezeigt wird.

10. Automatisches Steuersystem (2) zur Steuerung eines landwirtschaftlichen Maschinensystems (1) auf einem zu bearbeitenden Territorium (S), mit
- einer Positionsdatenermittlungseinrichtung (6), um automatisch aktuelle Positionsdaten (PD) des Maschinensystems (1) zu erfassen,
- einem Routenplanungssystem (4) zur Erstellung einer Route (R) für das Maschinensystem (1), welche Nutzfahrspuren (FN) umfasst, entlang deren das Maschinensystem (1) bei der Bearbeitung des Territoriums (S) gefahren wird, und welche Vorgewendefahrspuren (FV) umfasst, entlang derer das Maschinensystem (1) jeweils von einer Nutzfahrspur (FN) zu einer nachfolgend zu befahrenden Nutzfahrspur (FN) gefahren wird,
- einem Vorgewende-Managementsystem (5), welches das Maschinensystem (1) so steuert, dass zum Ende einer Nutzfahrspur (FN) und/oder während des Abfahrens einer nachfolgenden Vorgewendefahrspur (FV) und/oder zu Beginn einer nachfolgenden Nutzfahrspur (FN) vom Maschinensystem (1) jeweils automatisch eine Vorgewende-Arbeitsschrittsequenz abgearbeitet wird,
wobei das Vorgewende-Managementsystem (5) so ausgebildet ist, dass die Vorgewende-Arbeitsschrittsequenz jeweils in Abhängigkeit von der aktuellen Position des Maschinensystems (1) und in Abhängigkeit von der nachfolgend zu befahrenden Nutzfahrspur (FN) dynamisch aktualisiert, mit der Vorgewendefahrspur (FV) synchronisiert und abgearbeitet wird.

## Claims

1. A method of controlling an agricultural machine system (1) in the working of a territory (S) to be worked, in which a route (R) is created for the machine system (1), which includes working travel tracks (FN), along which the machine system (1) is driven in working of the territory (S), and which includes headland travel tracks (FV), along which the machine system (1) is driven from a respective working travel track (FN) to a working travel track (FN) which is to be subsequently travelled, wherein at the end of a working travel track (FN) and/or during the travel along a subsequent headland travel track (FV) and/or at the beginning of a subsequent working travel track (FN) a headland working step sequence is respectively automatically processed by the machine system (1),
**characterised in that**
the headland working step sequence is respectively dynamically updated in dependence on the current position of the machine system (1) and in dependence on the working travel track (FN) to be subsequently travelled, synchronised with the headland travel track (FV) and processed.

2. A method according to claim 1 **characterised in that** in respective dependence on
- the working travel track (F_{N}) that is currently being driven along,
- the working travel track (F_{N}) which is subsequently to be driven along,
- the geographical data of a headland area (V), and
- given machine parameters of the agricultural machine system (1) a headland travel track (F_{V}) between the working travel track (F_{N}) which is currently being driven along and that which is to be subsequently driven along is so ascertained that the machine system (1) merges in optimum fashion into the working travel track (F_{N}) which is to be subsequently driven along.

3. A method according to claim 2 **characterised in that** while travelling along the headland travel track (F_{V}) it is dynamically updated in dependence on the current position of the machine system (1).

4. A method according to one of claims 1 to 3 **characterised in that** when creating the route (R) for the machine system the working travel tracks (F_{N}) and the sequence in which the working travel tracks (F_{N}) are to be driven along are selected in dependence on given machine parameters and/or in dependence on the configuration of possible headland travel tracks (F_{V}) between the working travel tracks.

5. A method according to claim 4 **characterised in that** when travelling along a working travel track (F_{N}) the sequence in which the working travel tracks (F_{N}) which have not yet been travelled along are to be travelled along are dynamically updated.

6. A method according to one of claims 2 to 5 **characterised in that** the machine parameters which are taken into consideration when ascertaining the working travel tracks (F_{N}) and/or the sequence of the working travel tracks (F_{N}) and/or the headland travel tracks (F_{V}) include a working width and/or a turning circle of the machine system (1).

7. A method according to one of claims 2 to 6 **characterised in that** a headland travel track (F_{V}) between the working travel track (F_{N}) which is currently being travelled along and that which is to be subsequently travelled along is generated using individual turning arcs (B, B₁, B₂, B₃) which are respectively defined by the following parameters:
- a turning arc centre point (M, M₁, M₂, M₃),
- a turning radius (r),
- an arc measurement (δ₁, δ₂),
- a direction of travel (WR) along the turning arc (B, B₁, B₂, B₃), and
- information about adjoining turning arcs (B₁, B₂, B₃).

8. A method according to one of claims 1 to 7 **characterised in that** the machine system (1) is driven fully automatically along a headland travel track (F_{V}).

9. A method according to one of claims 1 to 8 **characterised in that** displayed to an operator of the machine system (1) for travelling along a headland travel track (F_{V}) on a display device (8_{D}) in a turning display mode is the headland travel track (F_{V}) in question.

10. An automatic control system (2) for controlling an agricultural machine system (1) on a territory (S) to be worked, comprising
- a position data determining device (6) for automatically detecting current position data (PD) of the machine system (1),
- a route planning system (4) for creating a route (R) for the machine system (1), which includes working travel tracks (FN) along which the machine system (1) is driven when working the territory (S), and which includes headland travel tracks (FV), along which the machine system (1) is respectively driven from a working travel track (FN) to a working travel track (FN) which is subsequently to be travelled along,
- a headland management system (5) which so controls the machine system (1) that at the end of a working travel track (FN) and/or while travelling along a subsequent headland travel track (FV) and/or at the beginning of a subsequent working travel track (FN) a headland working step sequence is automatically respectively processed by the machine system (1),
wherein the headland management system (5) is so adapted that the headland working step sequence is respectively dynamically updated in dependence on the current position of the machine system (1) and in dependence on the working travel track (FN) to be subsequently travelled, synchronised with the headland travel track (FV) and processed.

## Revendications

1. Procédé de commande d'un système de machine agricole (1) lors du travail d'un territoire à travailler (S), dans lequel un itinéraire (R) pour le système de machine (1) est élaboré, lequel comprend des voies de circulation utiles (FN) le long desquelles le système de machine (1) est conduit lors du travail du territoire (S), et lequel comprend des voies de circulation en bout de champ (FV) le long desquelles le système de machine (1) est conduit d'une voie de circulation utile (FN) vers une voie de circulation utile (FN) suivante à parcourir, une séquence d'opérations en bout de champ étant exécutée automatiquement par le système de machine (1) à la fin d'une voie de circulation utile (FN) et/ou pendant le parcours d'une voie de circulation en bout de champ (FV) suivante et/ou au début d'une voie de circulation utile (FN) suivante, **caractérisé en ce que** la séquence d'opérations en bout de champ est actualisée, synchronisée avec la voie de circulation en bout de champ (FV) et exécutée dynamiquement chaque fois en fonction de la position courante du système de machine (1) et en fonction de la voie de circulation utile (FN) suivante à parcourir.

2. Procédé selon la revendication 1, **caractérisé en ce qu'**en fonction, chaque fois,
- de la voie de circulation utile (F_{N}) courante parcourue,
- de la voie de circulation utile (F_{N}) suivante à parcourir,
- des données géographiques d'une zone en bout de champ (V),
- et de certains paramètres de machine du système de machine agricole (1)
une voie de circulation en bout de champ (F_{V}) entre la voie de circulation utile (F_{N}) courante parcourue et la suivante à parcourir est déterminée, de façon que le système de machine (1) s'engage de manière optimale dans la voie de circulation utile (F_{N}) suivante à parcourir.

3. Procédé selon la revendication 2, **caractérisé en ce que**, pendant le parcours de la voie de circulation en bout de champ (F_{V}), celle-ci est actualisée dynamiquement en fonction de la position courante du système de machine (1).

4. Procédé selon une des revendications 1 à 3, **caractérisé en ce que**, lors de l'élaboration de l'itinéraire (R) pour le système de machine, les voies de circulation utiles (F_{N}) et l'ordre dans lequel les voies de circulation utiles (F_{N}) doivent être parcourues sont choisis en fonction de certains paramètres de machine et/ou en fonction du tracé de voies de circulation en bout de champ (F_{V}) possibles entre les voies de circulation utiles.

5. Procédé selon la revendication 4, **caractérisé en ce que**, lors d'un trajet le long d'une voie de circulation utile (F_{N}), l'ordre dans lequel les voies de circulation utiles (F_{N}) non encore parcourues doivent être parcourues est actualisé dynamiquement.

6. Procédé selon une des revendications 2 à 5, **caractérisé en ce que** les paramètres de machine pris en compte lors de la détermination des voies de circulation utiles (F_{N}) et/ou de l'ordre des voies de circulation utiles (F_{N}) et/ou des voies de circulation en bout de champ (FV) comprennent une largeur de travail et/ou un cercle de braquage du système de machine (1).

7. Procédé selon une des revendications 2 à 6, **caractérisé en ce qu'**une voie de circulation en bout de champ (FV) entre la voie de circulation utile (F_{N}) courante parcourue et la suivante à parcourir est générée en utilisant différents arcs de braquage (B, B1, B2, B3), lesquels sont chaque fois définis par les paramètres suivants :
- un centre d'arc de braquage (M, M1, M2, M3),
- un rayon de braquage (r),
- une mesure d'arc (δ1, δ2),
- un sens de marche (WR) le long de l'arc de braquage (B, B1, B2, B3),
- une information sur les arcs de braquage (B1, B2, B3) suivants.

8. Procédé selon une des revendications 1 à 7, **caractérisé en ce que** le système de machine (1) est conduit entièrement automatiquement le long d'une voie de circulation en bout de champ (F_{V}).

9. Procédé selon une des revendications 1 à 8, **caractérisé en ce que**, pour parcourir une voie de circulation en bout de champ (F_{V}), la voie de circulation en bout de champ (F_{V}) correspondante est affichée à un opérateur du système de machine (1) sur un dispositif d'affichage (8_{D}) dans un mode d'affichage de changement de direction.

10. Système de commande automatique (2) pour commander un système de machine agricole (1) sur un territoire (S) à travailler, comprenant
- un dispositif de détermination de données de position (6) pour détecter automatiquement des données de position courante (PD) du système de machine (1),
- un système de planification d'itinéraires (4) pour élaborer un itinéraire (R) pour le système de machine (1), lequel comprend des voies de circulation utiles (FN) le long desquelles le système de machine (1) est conduit lors du travail du territoire (S), et lequel comprend des voies de circulation en bout de champ (FV) le long desquelles le système de machine (1) est conduit d'une voie de circulation utile (FN) vers une voie de circulation utile (FN) suivante à parcourir,
- un système de gestion des manoeuvres en bout en champ (5), lequel commande le système de machine, (1) de façon qu'une séquence d'opérations en bout de champ soit exécutée automatiquement par le système de machine (1) à la fin d'une voie de circulation utile (FN) et/ou pendant le parcours d'une voie de circulation en bout de champ (FV) suivante et/ou au début d'une voie de circulation utile (FN) suivante, le système de gestion des manoeuvres en bout en champ (5) étant conçu de façon que la séquence d'opérations en bout de champ soit actualisée, synchronisée avec la voie de circulation en bout de champ (FV) et exécutée dynamiquement chaque fois en fonction de la position courante du système de machine (1) et en fonction de la voie de circulation utile (FN) suivante à parcourir.
